# EUROPÄISCHE PATENTANMELDUNG

(11) **EP 4 682 014 A1**
(43) Veröffentlichungstag der Anmeldung: **21.01.2026**
(21) Anmeldenummer: 25182971.9
(22) Anmeldetag: 16.06.2025
(51) Int. Cl.: B61F 19/00, B60B 35/16

(54) **BALLISTISCHE SCHUTZANORDNUNG FÜR FAHRZEUGE, RADSATZWELLE UND BEARBEITUNGSVERFAHREN**

(30) Priorität: 15.07.2024 AT 505872024
(71) Anmelder: Siemens Mobility Austria GmbH, 1210 Wien (AT)
(72) Erfinder: Boronkai, Laszlo, 8101 Gratkorn (AT)
(74) Vertreter: Siemens Patent Attorneys

(57) **Zusammenfassung**

Die Erfindung betrifft eine ballistische Schutzanordnung für Fahrzeuge, insbesondere für eine Radsatzwelle (1) für ein Fahrwerk für ein Schienenfahrzeug, mit zumindest einer gekrümmten oder krümmbaren ersten Schale (2), welche die Radsatzwelle (1) zumindest teilweise ummantelnd anordenbar ist, sowie mit zumindest einer länglichen, zumindest teilweise um die zumindest erste Schale (2) anordenbaren ersten Befestigungsvorrichtung (4).

Es wird vorgeschlagen, dass die zumindest erste Schale (2) zumindest eine erste Haltevorrichtung (5) aufweist, mittels welcher die zumindest erste Befestigungsvorrichtung (4) an der zumindest ersten Schale (2) positionierbar und arretierbar ist, wobei die zumindest erste Schale (2) mittels der zumindest ersten Befestigungsvorrichtung (4) und der zumindest ersten Haltevorrichtung (5) an der Radsatzwelle (1) befestigbar ist, und wobei die zumindest erste Haltevorrichtung (5) einstückig mit der zumindest ersten Schale (2) ausgebildet ist.

Dadurch wird ein sicherer Verschluss und ein moderater Bauraumbedarf der Schutzanordnung bewirkt.

## Beschreibung

Die Erfindung betrifft eine ballistische Schutzanordnung für Fahrzeuge, insbesondere für eine Radsatzwelle für ein Fahrwerk für ein Schienenfahrzeug, mit zumindest einer gekrümmten oder krümmbaren ersten Schale, welche die Radsatzwelle zumindest teilweise ummantelnd anordenbar ist, sowie mit zumindest einer länglichen, zumindest teilweise um die zumindest erste Schale anordenbaren Befestigungsvorrichtung.

Es ist bedeutsam, dass Komponenten von Fahrzeugen, beispielsweise Radsatzwellen für Fahrwerke für Schienenfahrzeuge, vor Schäden geschützt sind. Radsatzwellen müssen häufig hohen Belastungen, insbesondere auf Biegung und Torsion, standhalten.

Die in der Europäischen Norm (EN) 13103-1 und in der Technischen Spezifikation (TS) 13103-2 vorgeschriebenen Auslegungsmethoden gelten nur für nicht-korrodierte Werkstoffe und unbeschädigte Oberflächen. Unter anderem aus diesem Grund ist es wichtig, dass Radsatzwellen einen Korrosionsschutz aufweisen und dass dieser sowie die Radsatzwellen selbst vor Oberflächenschäden, die beispielsweise durch Steinschlag, Sand, Schnee und Eis oder einer Einwirkung hoher oder tiefer Temperaturen verursacht werden können, geschützt sind. Treten Oberflächenschäden (z.B. Kerben) auf, müssen betroffene Radsatzwellen repariert werden, wodurch ein großer Instandhaltungsaufwand sowie eine reduzierte Verfügbarkeit der Fahrzeuge verursacht werden können.

Zum Korrosionsschutz können Radsatzwellen beispielsweise mit Polyharnstoff oder extrudiertem Polyethylen etc. beschichtet sein. Beschichtete Radsatzwellen weisen jedoch häufig nur einen schwachen Widerstand gegen aufprallende Objekte auf und sind schwer reparierbar. Für Radsatzwellen eingesetzte Beschichtungen weisen oft unzureichende Brandschutzeigenschaften auf. Schalen- oder mantelartige Vorrichtungen, mit welchen Radsatzwellen beispielsweise zum Schutz vor aufprallenden Objekten ummantelt werden, weisen häufig einen hohen Bauraumbedarf auf.

Aus dem Stand der Technik ist beispielsweise die WO 2018/166949 A1 bekannt, in welcher eine ballistische Schutzanordnung für Fahrzeuge beschrieben ist. Die Schutzanordnung umfasst eine Schale mit einer Materialschicht, die einen Faserwerkstoff aufweist. Die Schale ist um eine Radsatzwelle eines Schienenfahrzeugs anordenbar und kann einen Reißverschluss oder einen Knopfverschluss aufweisen. Mittels des Reißverschlusses oder des Knopfverschlusses kann die Schale mit der Radsatzwelle verbunden werden.

Ferner zeigt die EP 1 942 040 A1 eine Schutzschale für eine Radsatzwelle eines Schienenfahrzeugs, welche eine abschirmende Außenlage und eine dämpfende Innenlage aufweist. Die Außenlage weist an ihren Enden von einer Außenkontur der Außenlage in Richtung der Innenlage abgesetzte Verschlusskanten zur Aufnahme eines Befestigungsbands auf, wobei die Verschlusskanten mittels des Befestigungsbands verbunden werden können.

Darüber hinaus offenbart die WO 2011/101401 A1 eine Radsatzschutzvorrichtung mit einer Elastomermatte, die an eine Radsatzwelle angelegt und über Haltemittel an der Radsatzwelle befestigt werden kann.

Der Erfindung liegt die Aufgabe zugrunde, eine gegenüber dem Stand der Technik weiterentwickelte ballistische Schutzanordnung mit einem kompakten und dennoch sicheren Verschluss anzugeben.

Erfindungsgemäß wird diese Aufgabe gelöst mit einer ballistischen Schutzanordnung gemäß Anspruch 1, bei der die zumindest erste Schale zumindest eine erste Haltevorrichtung aufweist, mittels welcher die zumindest erste Befestigungsvorrichtung an der zumindest ersten Schale positionierbar und arretierbar ist, wobei die zumindest erste Schale mittels der zumindest ersten Befestigungsvorrichtung und der zumindest ersten Haltevorrichtung an der Radsatzwelle befestigbar ist, und wobei die zumindest erste Haltevorrichtung einstückig mit der zumindest ersten Schale ausgebildet ist.

Durch diese Maßnahme kann auf separate, mit der ersten Schale zu verbindende Verschlussvorrichtungen, welche einen hohen Bauraumbedarf aufweisen können, verzichtet werden. Die komplette erste Haltevorrichtung kann einstückig mit der ersten Schale ausgebildet sein.

Die erste Befestigungsvorrichtung erhöht beispielsweise einen Gesamtdurchmesser der Schutzanordnung nur moderat, wenn die erste Schale z.B. die Radsatzwelle ummantelnd angeordnet ist. Aufgrund der ersten Haltevorrichtung und der ersten Befestigungsvorrichtung wird ein sicherer Verschluss der Schutzanordnung ermöglicht. Die erste Befestigungsvorrichtung kann beispielsweise als Befestigungsband etc. ausgebildet sein. Das Befestigungsband kann z.B. schmal, biegsam und metallisch ausgeführt sein.

Die erste Befestigungsvorrichtung kann, wenn die erste Schale z.B. die Radsatzwelle ummantelnd angeordnet ist, beispielsweise gekrümmt und entlang eines Umfangs der ersten Schale an die erste Schale angelegt sein.

Die erste Schale kann beispielsweise mittels der ersten Befestigungsvorrichtung mit der Radsatzwelle verspannt werden.

Die erste Schale kann beispielsweise zunächst eben ausgebildet sein und z.B. mittels eines Umformprozesses in eine mit der Radsatzwelle korrelierende (beispielsweise halbzylindrische) Form gebracht werden etc.

Die erste Haltevorrichtung kann beispielsweise zumindest eine Ausformung aus der ersten Schale umfassen, die z.B. durch einen Schneideprozess und einen Umformprozess hergestellt werden kann etc.

Es ist beispielsweise auch möglich, dass die erste Schale mittels einer ersten Mehrzahl an Haltevorrichtungen und einer zweiten Mehrzahl an Befestigungsvorrichtungen an der Radsatzwelle befestigbar ist. Die einzelnen Befestigungsvorrichtungen können beispielsweise parallel zueinander und entlang einer Längsachse der Radsatzwelle aufeinanderfolgend angeordnet sein etc.

Für jede Befestigungsvorrichtung kann beispielsweise ein Haltevorrichtungspaar auf der ersten Schale ausgebildet sein etc.

Weitere vorteilhafte Ausgestaltungen der erfindungsgemäßen ballistischen Schutzanordnung ergeben sich aus den Unteransprüchen.

Günstig ist es beispielsweise, wenn die zumindest erste Befestigungsvorrichtung an der zumindest ersten Schale formschlüssig arretierbar ist.

Ein Formschluss kann beispielsweise dadurch erreicht werden, dass die erste Befestigungsvorrichtung an ihren Enden abgewinkelt oder umgeknickt und in die erste Haltevorrichtung eingehakt wird etc. Dadurch kann ein sicherer Halt der ersten Befestigungsvorrichtung bewirkt werden, ohne dass zusätzliche Befestigungsmittel (z.B. Schrauben etc.) erforderlich sind.

Eine Vorzugslösung erhält man ferner, wenn die zumindest erste Haltevorrichtung zumindest einen brückenförmigen oder stegförmigen ersten Abschnitt aufweist, wobei zwischen zumindest einem Bereich der zumindest ersten Schale abseits des zumindest ersten Abschnitts und dem zumindest ersten Abschnitt zumindest ein erster Durchlass ausgebildet ist, und wobei die zumindest erste Befestigungsvorrichtung durch den zumindest ersten Durchlass hindurchführbar ist und der zumindest erste Abschnitt mittels der zumindest ersten Befestigungsvorrichtung zumindest teilweise ummantelbar ist.

Durch diese Maßnahme wird es möglich, die erste Befestigungsvorrichtung beispielsweise durch Umschlagen oder Umknicken von deren Enden etc. an dem ersten Abschnitt zu arretieren. Ein Ende der Befestigungsvorrichtung kann beispielsweise unterhalb des ersten Abschnitts durch den ersten Durchlass hindurchgeführt, umgeschlagen und an eine Oberseite des ersten Abschnitts angelegt werden. So wird eine einfache und effektive Verbindung zwischen der ersten Befestigungsvorrichtung und dem ersten Abschnitt erreicht. Der erste Abschnitt kann beispielsweise von jenem Bereich der ersten Schale abseits des ersten Abschnitts abstehend ausgerichtet sein etc.

Zwischen dem ersten Abschnitt und dem Bereich der ersten Schale abseits des ersten Abschnitts können beispielsweise Ausnehmungen oder Vertiefungen in der ersten Schale ausgebildet sein, um ein Hindurchführen der ersten Befestigungsvorrichtung durch den ersten Durchlass zu erleichtern etc.

Empfehlenswert kann es darüber hinaus sein, wenn die zumindest erste Schale in dem zumindest einen Bereich abseits des zumindest ersten Abschnitts im Bereich des zumindest ersten Durchlasses und/oder der zumindest erste Abschnitt im Bereich des zumindest ersten Durchlasses zahnförmig oder zackenförmig ausgeführt sind oder ist.

Eine zahnförmige oder zackenförmige Ausführung der ersten Schale in dem Bereich abseits des ersten Abschnitts und/oder des ersten Abschnitts ermöglicht, dass dann, wenn die erste Befestigungsvorrichtung mit der ersten Haltevorrichtung verbunden ist, Kerben in der ersten Befestigungsvorrichtung gebildet werden können, welche einen Widerstand gegen eine unbeabsichtigte Bewegung der ersten Befestigungsvorrichtung relativ zu der ersten Schale verursachen können.

Einen starken Widerstand gegen eine unbeabsichtigte Bewegung der ersten Befestigungsvorrichtung relativ zu der ersten Schale über eine große Bandbreite an Belastungen auf die erste Befestigungsvorrichtung erreicht man, wenn die zumindest erste Schale in dem zumindest einen Bereich abseits des zumindest ersten Abschnitts und/oder der zumindest erste Abschnitt eine erste Zahnreihe oder erste Zackenreihe mit zumindest vier Zähnen oder Zacken aufweisen oder aufweist.

Hilfreich kann es euch sein, wenn die zumindest erste Haltevorrichtung zumindest eine erste Lasche aufweist, welche an die zumindest erste Befestigungsvorrichtung anlegbar ist, wobei die zumindest erste Befestigungsvorrichtung zwischen der zumindest ersten Schale und der zumindest ersten Lasche anordenbar ist.

Durch diese Maßnahme kann beispielsweise ein loses Ende der ersten Befestigungsvorrichtung gehalten werden, so dass das lose Ende nicht oder nicht weit von der ersten Schale abstehen kann.

Eine modulartige Anordnung erhält man, wenn die Schutzanordnung eine gekrümmte oder krümmbare zweite Schale aufweist, welche zusammen mit der ersten Schale die Radsatzwelle ummantelnd anordenbar ist, wobei die erste Schale und die zweite Schale mittels der zumindest ersten Befestigungsvorrichtung und der zumindest ersten Haltevorrichtung an der Radsatzwelle befestigbar sind.

Dadurch ist beispielsweise bei einer Beschädigung der ersten Schale oder der zweiten Schale die erste Schale oder die zweite Schale separat tauschbar.

Es ist z.B. möglich, dass die zweite Schale keine eigene Haltevorrichtung aufweist und mittels der ersten Befestigungsvorrichtung, welche beispielsweise die zweite Schale umgreifen kann, wenn die erste Schale und die zweite Schale z.B. um die Radsatzwelle angeordnet sind, an der Radsatzwelle befestigt ist.

Ein starker Halt der ersten Befestigungsvorrichtung an der ersten Schale wird ermöglicht, wenn zumindest eine Oberfläche der zumindest ersten Befestigungsvorrichtung rau, insbesondere gefurcht, gerillt oder gerändelt, ausgebildet ist.

Eine Rändelung der Oberfläche kann beispielsweise gemäß der DIN-Norm DIN 82 vorgenommen werden etc. Es ist auch möglich, dass die Oberfläche z.B. mittels einer Oberflächenbehandlung wie Kugelstrahlen, Sandstrahlen etc. aufgeraut wird.

Günstig ist es auch, wenn der Radsatzwelle und der zumindest ersten Schale zumindest eine erste Einlage zwischenordenbar ist, wobei die zumindest erste Schale metallisch ausgebildet ist und die zumindest erste Einlage in einem Faserwerkstoff oder einem Faserverbundwerkstoff ausgebildet ist.

Eine metallische Ausführung der ersten Schale bewirkt eine hohe Zugfestigkeit der ersten Schale, wodurch die erste Schale eine starke Resistenz gegen auf die Schutzanordnung aufprallende Objekte (z.B. Steine) aufweist. Ein Einsatz des Faserwerkstoffs oder des Faserverbundwerkstoffs für die erste Einlage bewirkt wiederum eine hohe Energieabsorption oder Dämpfung bei Objekten, die mit hoher Geschwindigkeit auf die Schutzanordnung aufprallen. Dadurch werden ein wirksamer Schutz gegen Deformationen und sonstige Schäden, z.B. der Radsatzwelle, sowie eine akustische Dämmung ermöglicht.

Ein erfolgversprechendes Anwendungsgebiet für die erfindungsgemäße Schutzanordnung kann mit einer Radsatzwelle für ein Fahrwerk für ein Schienenfahrzeug mit zumindest einer erfindungsgemäßen ballistischen Schutzanordnung erschlossen werden.

Radsatzwellen für Schienenfahrzeuge sind häufig einer starken Belastung aufgrund von aus einem Schotterbett im Bereich eines Gleises aufgewirbelten und auf die Radsatzwellen aufprallenden Steinen etc. ausgesetzt, weshalb beispielsweise ein Steinschlagschutz empfehlenswert sein kann.

Eine präzise Formgebung sowie bedarfsgerechte Festigkeitseigenschaften werden mit einem Verfahren zum Bearbeiten einer ersten Schale insbesondere einer erfindungsgemäßen ballistischen Schutzanordnung für Fahrzeuge erreicht, wobei in einem ersten Verfahrensschritt aus der ersten Schale zumindest eine erste Haltevorrichtung, mittels welcher eine längliche, zumindest teilweise um die erste Schale anordenbare erste Befestigungsvorrichtung der Schutzanordnung an der ersten Schale positionierbar und arretierbar ist, wobei die erste Schale mittels der ersten Befestigungsvorrichtung und der zumindest ersten Haltevorrichtung insbesondere an einer Radsatzwelle für ein Fahrwerk für ein Schienenfahrzeug befestigbar ist, durch teilweises und spaltförmiges Ausschneiden oder Ausfräsen von Material aus der ersten Schale einstückig mit der ersten Schale ausgebildet wird, wobei in einem nach dem ersten Verfahrensschritt durchgeführten zweiten Verfahrensschritt die erste Schale mittels eines ersten Umformvorgangs in eine Form gebracht wird, in welcher die erste Schale die Radsatzwelle zumindest teilweise ummantelnd anordenbar ist.

Das Ausschneiden kann beispielsweise mittels eines Laserschneidevorgangs oder eines Wasserstrahlschneidevorgangs etc. realisiert werden. Der erste Umformvorgang kann z.B. ein Drückvorgang, Pressvorgang oder Walzvorgang etc. sein. Das spaltförmige Ausschneiden bewirkt, dass die erste Haltevorrichtung nach dem Ausschneiden aufwandsarm manipuliert (z.B. in eine gewünschte Form gebogen) werden kann, da beispielsweise ein hierfür benötigtes Werkzeug im Bereich eines Spalts angesetzt werden kann etc.

Günstig ist es, wenn in einem dritten Verfahrensschritt zumindest ein brückenförmiger oder stegförmiger erster Abschnitt der zumindest ersten Haltevorrichtung und/oder zumindest eine erste Lasche der zumindest ersten Haltevorrichtung mittels eines zweiten Umformvorgangs derart umgeformt werden oder wird, dass der zumindest erste Abschnitt und/oder die zumindest erste Lasche von der ersten Schale abstehend ausgerichtet sind oder ist.

Durch diese Maßnahme wird ein genaues Positionieren und ein sicheres Arretieren der ersten Befestigungsvorrichtung mittels der ersten Haltevorrichtung ermöglicht. Der zweite Umformvorgang kann beispielsweise ein Drückvorgang, Pressvorgang oder Biegevorgang etc. sein.

Nachfolgend wird die Erfindung anhand von Ausführungsbeispielen näher erläutert.

Es zeigen beispielhaft:

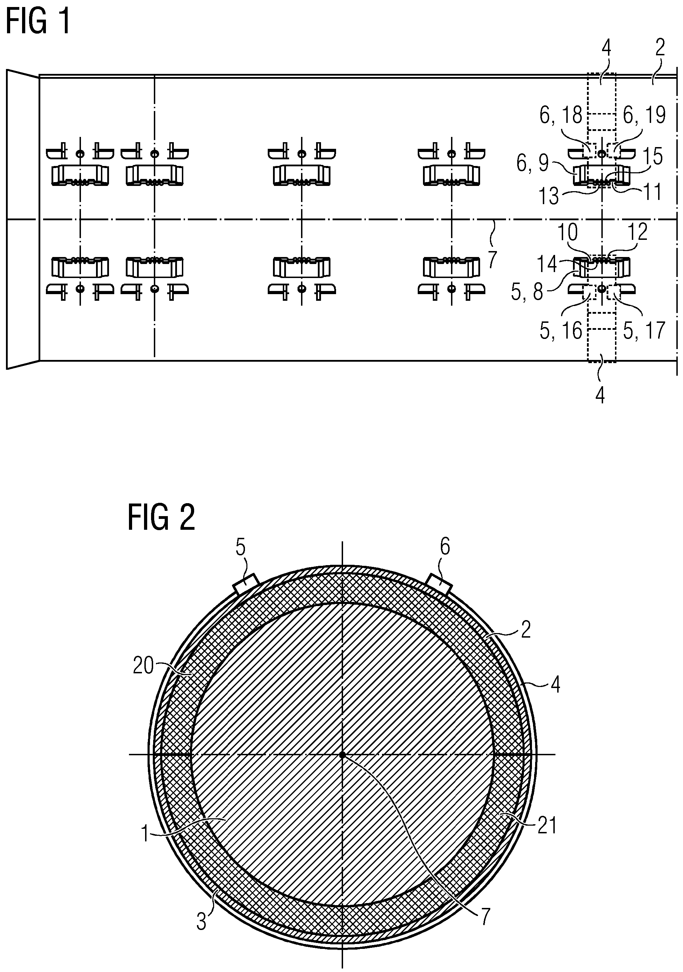

- Fig. 1:: Einen Grundriss eines Ausschnitts aus einer beispielhaften ersten Ausführungsvariante einer erfindungsgemäßen ballistischen Schutzanordnung, mit einer Mehrzahl an paarweise angeordneten Haltevorrichtungen, wobei mit einer ersten Haltevorrichtung und einer zweiten Haltevorrichtung eine erste Befestigungsvorrichtung verbunden ist,
- Fig. 2:: Einen Seitenriss einer beispielhaften Ausführungsvariante einer erfindungsgemäßen Radsatzwelle eines Fahrwerks eines Schienenfahrzeugs in geschnittener Darstellung, welche von einer beispielhaften zweiten Ausführungsvariante einer erfindungsgemäßen ballistischen Schutzanordnung, welche eine äußere, metallische erste Schale und eine faserhaltige erste Einlage sowie eine äußere, metallische zweite Schale und eine faserhaltige zweite Einlage umfasst und mittels einer ersten Haltevorrichtung, einer zweiten Haltevorrichtung sowie einer ersten Befestigungsvorrichtung an der Radsatzwelle befestigt ist, ummantelt ist, und

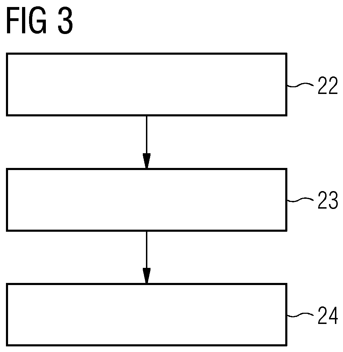

- Fig. 3:: Ein Flussdiagramm zu einer beispielhaften Ausführungsvariante eines erfindungsgemäßen Verfahrens zum Bearbeiten einer ersten Schale einer ballistischen Schutzanordnung für Fahrzeuge.

Fig. 1 zeigt einen Grundriss eines Ausschnitts aus einer beispielhaften ersten Ausführungsvariante einer erfindungsgemäßen ballistischen Schutzanordnung für ein Fahrzeug mit einer Mehrzahl an paarweise angeordneten Haltevorrichtungen.

Die Schutzanordnung ummantelt eine Radsatzwelle 1 eines Fahrwerks eines Schienenfahrzeugs, wie sie beispielhaft in Fig. 2 dargestellt ist.

Die Schutzanordnung umfasst eine metallische erste Schale 2, welche die Radsatzwelle 1 teilweise ummantelnd angeordnet und hierfür in eine mit der Radsatzwelle 1 korrelierende, halbzylindrische Form gekrümmt ist.

Um die erste Schale 2 ist eine erste Befestigungsvorrichtung 4 angeordnet, welche als schmales, biegsames, metallisches Befestigungsband ausgeführt und entlang eines Umfangs der ersten Schale 2 angeordnet ist.

Die erste Schale 2 weist eine erste Haltevorrichtung 5 und eine zweite Haltevorrichtung 6 auf, mittels welchen die erste Befestigungsvorrichtung 4 an der ersten Schale 2 positioniert und arretiert ist. Die erste Haltevorrichtung 5 und die zweite Haltevorrichtung 6 bilden ein erstes Haltevorrichtungspaar und sind an jenem Umfang der ersten Schale 2 angeordnet, an welchem auch die erste Befestigungsvorrichtung 4 angeordnet ist.

Die erste Schale 2 weist weitere Haltevorrichtungspaare auf, welche, parallel zu dem ersten Haltevorrichtungspaar, entlang einer Längsachse 7 der Radsatzwelle 1 angeordnet sein. Mit den weiteren Haltevorrichtungspaaren können in Fig. 1 nicht gezeigte, weitere Befestigungsvorrichtungen verbunden werden, welche parallel zu der ersten Befestigungsvorrichtung 4 ausgerichtet sein können.

Die weiteren Befestigungsvorrichtungen können konstruktiv und funktionell gleich wie die erste Befestigungsvorrichtung 4 ausgebildet sein.

Oberflächen der ersten Befestigungsvorrichtung 4 sind gerändelt und daher rau ausgebildet. Erfindungsgemäß ist es auch vorstellbar, dass die Oberflächen durch Kugelstrahl- oder Sandstrahlvorgänge etc. gefurcht oder gerillt etc. ausgebildet sind.

Die zweite Haltevorrichtung 6 ist konstruktiv gleich wie die erste Haltevorrichtung 5 ausgeführt, ebenso sind die weiteren Haltevorrichtungspaare konstruktiv gleich wie das erste Haltevorrichtungspaar ausgebildet.

Die zweite Haltevorrichtung 6 ist spiegelverkehrt zu der ersten Haltevorrichtung 5 ausgerichtet. Haltevorrichtungen der weiteren Haltevorrichtungspaare sind ebenfalls paarweise spiegelverkehrt zueinander ausgerichtet.

Die erste Schale 2 ist mittels der ersten Befestigungsvorrichtung 4 und des ersten Haltevorrichtungspaars an der Radsatzwelle 1 befestigt und kann mittels der weiteren Befestigungsvorrichtungen und der weiteren Haltevorrichtungspaare an der Radsatzwelle 1 befestigt werden. Das erste Haltevorrichtungspaar und die weiteren Haltevorrichtungspaare sind einstückig mit der ersten Schale 2 ausgebildet.

Die erste Haltevorrichtung 5 weist einen brückenförmigen ersten Abschnitt 8 auf, wobei zwischen einem ersten Bereich der ersten Schale 2 abseits des ersten Abschnitts 8 und dem ersten Abschnitt 8 ein erster Durchlass 10 ausgebildet ist. Die erste Befestigungsvorrichtung 4 ist unterhalb des ersten Abschnitts 8 durch den ersten Durchlass 10 hindurchgeführt. Der erste Abschnitt 8 ist mittels der ersten Befestigungsvorrichtung 4, welche an einem ersten Ausgang des ersten Durchlasses 10 umgeschlagen und an eine erste Oberseite des ersten Abschnitts 8 angelegt ist, teilweise ummantelt, wodurch die erste Befestigungsvorrichtung 4 formschlüssig an der ersten Schale 2 arretiert ist.

Die zweite Haltevorrichtung 6 weist einen brückenförmigen zweiten Abschnitt 9 auf, wobei zwischen einem zweiten Bereich der ersten Schale 2 abseits des zweiten Abschnitts 9 und dem zweiten Abschnitt 9 ein zweiter Durchlass 11 ausgebildet ist. Die erste Befestigungsvorrichtung 4 ist unterhalb des zweiten Abschnitts 9 durch den zweiten Durchlass 11 hindurchgeführt. Der zweite Abschnitt 9 ist mittels der ersten Befestigungsvorrichtung 4, welche an einem zweiten Ausgang des zweiten Durchlasses 11 umgeschlagen und an eine zweite Oberseite des zweiten Abschnitts 9 angelegt ist, teilweise ummantelt, wodurch die erste Befestigungsvorrichtung 4 formschlüssig an der ersten Schale 2 arretiert ist.

Erfindungsgemäß ist es auch vorstellbar, dass der erste Abschnitt 8 und/oder der zweite Abschnitt 9 beispielsweise einseitig frei, z.B. stegförmig, ausgeführt sind oder ist.

Die erste Schale 2 ist in dem ersten Bereich und dem zweiten Bereich abseits des ersten Abschnitts 8 und des zweiten Abschnitts 9 in Bereichen des ersten Durchlasses 10 und des zweiten Durchlasses 11 zahnförmig mit einer ersten Zahnreihe 12 und einer zweiten Zahnreihe 13, die jeweils vier Zähne aufweisen, ausgeführt. Der erste Abschnitt 8 und der zweite Abschnitt 9 sind in Bereichen des ersten Durchlasses 10 und des zweiten Durchlasses 11 ebenfalls zahnförmig mit einer dritten Zahnreihe 14 und einer vierten Zahnreihe 15, die jeweils vier Zähne aufweisen, ausgeführt.

Die erste Zahnreihe 12 ist als erste Gegenkontur zu der dritten Zahnreihe 14 ausgebildet, die zweite Zahnreihe 13 als zweite Gegenkontur zu der vierten Zahnreihe 15.

Zahnspitzen der Zähne weisen Radien von 0,75 mm auf.

Erfindungsgemäß ist es jedoch auch vorstellbar, anstelle der ersten Zahnreihe 12, der zweiten Zahnreihe 13, der dritten Zahnreihe 14 und der vierten Zahnreihe 15 beispielsweise Zackenreihen auszubilden etc.

Erfindungsgemäß ist es weiterhin denkbar, eine andere Anzahl an Zähnen oder eine andere Zahngeometrie (z.B. eine größere Zähnezahl oder eine größere Zahnlänge innerer Zähne als bei äußeren Zähnen einer Zahnreihe, über die Zahnreihe veränderliche Zahnspitzenradien etc.) etc. vorzusehen.

Die erste Haltevorrichtung 5 weist eine erste Lasche 16 und eine zweite Lasche 17 auf, welche im Bereich eines umgeschlagenen ersten Endes der ersten Befestigungsvorrichtung 4 an die erste Befestigungsvorrichtung 4 angelegt sind, wobei die erste Befestigungsvorrichtung 4 zwischen der ersten Schale 2 einerseits und der ersten Lasche 16 sowie der zweiten Lasche 17 andererseits angeordnet ist.

Die zweite Haltevorrichtung 6 weist eine dritte Lasche 18 und eine vierte Lasche 19 auf, welche im Bereich eines umgeschlagenen zweiten Endes der ersten Befestigungsvorrichtung 4 an die erste Befestigungsvorrichtung 4 angelegt sind, wobei die erste Befestigungsvorrichtung 4 zwischen der ersten Schale 2 einerseits und der dritten Lasche 18 sowie der vierten Lasche 19 andererseits angeordnet ist.

Das erste Ende und das zweite Ende der ersten Befestigungsvorrichtung 4 sind abgeknickt ausgebildet, um ein Ausfädeln der ersten Befestigungsvorrichtung 4 unter der ersten Lasche 16, der zweiten Lasche 17, der dritten Lasche 18 und der vierten Lasche 19 zu vermeiden.

Die erste Lasche 16, die zweite Lasche 17, die dritte Lasche 18 und die vierte Lasche 19 sind aus einem von der ersten Schale 2 abstehenden Ausgangszustand gegen die erste Befestigungsvorrichtung 4 gebogen.

Die erste Befestigungsvorrichtung 4 ist mittels der ersten Lasche 16, der zweiten Lasche 17, der dritten Lasche 18 und der vierten Lasche 19 gegen die erste Schale 2 gedrückt. Die weiteren Befestigungsvorrichtungen können mittels weiterer Laschen der weiteren Haltevorrichtungspaare gegen die erste Schale 2 gedrückt werden.

In Fig. 2 ist ein Seitenriss einer beispielhaften Ausführungsvariante einer erfindungsgemäßen Radsatzwelle 1 eines Fahrwerks eines Schienenfahrzeugs in geschnittener Darstellung offenbart, welche von einer beispielhaften zweiten Ausführungsvariante einer erfindungsgemäßen ballistischen Schutzanordnung ummantelt ist. Diese beispielhafte zweite Ausführungsvariante einer erfindungsgemäßen ballistischen Schutzanordnung ist im Hinblick auf konstruktive und funktionale Prinzipien gleich wie jene in Fig. 1 gezeigte, beispielhafte erste Ausführungsvariante einer erfindungsgemäßen ballistischen Schutzanordnung ausgeführt.

Die Schutzanordnung umfasst eine äußere, metallische erste Schale 2 und eine faserhaltige erste Einlage 20 sowie eine äußere, metallische zweite Schale 3 und eine faserhaltige zweite Einlage 21. Der Radsatzwelle 1 und der ersten Schale 2 ist die erste Einlage 20 zwischengeordnet, der Radsatzwelle 1 und der zweiten Schale 3 ist die zweite Einlage 21 zwischengeordnet.

Die erste Schale 2, die zweite Schale 3, die erste Einlage 20 und die zweite Einlage 21 sind halbzylindrisch gekrümmt ausgeführt. Die erste Schale 2 und die erste Einlage 20 sind an die zweite Schale 3 und die zweite Einlage 21 angrenzend angeordnet. Erfindungsgemäß ist es jedoch auch möglich, dass z.B. die erste Schale 2 und die zweite Schale 3 einander überlappend angeordnet sind etc.

Erfindungsgemäß ist es ferner möglich, dass die erste Schale 2 und die zweite Schale 3 sowie die erste Einlage 20 und die zweite Einlage 21 so angeordnet sind, so dass erste Trennfugen zwischen der ersten Schale 2 und der zweiten Schale 3 von zweiten Trennfugen zwischen der ersten Einlage 20 und der zweiten Einlage 21 versetzt sind (beispielsweise um eine Winkellage von 90 °) etc.

Die zweite Schale 3 und die zweite Einlage 21 sind zusammen mit der ersten Schale 2 und der ersten Einlage 20 die Radsatzwelle 1 ummantelnd angeordnet.

Die erste Schale 2 und die zweite Schale 3 sind in Stahl, also metallisch, ausgebildet. Die erste Einlage 20 und die zweite Einlage 21 sind in einem Faserwerkstoff mit einem Fasergewebe aus Kunstfasern, die in Polyethylen ausgebildet sind, ausgeführt.

Erfindungsgemäß ist es jedoch auch vorstellbar, die erste Einlage 20 und/oder die zweite Einlage 21 beispielsweise in einem Faserverbundwerkstoff auszubilden.

Die erste Schale 2, nicht jedoch die zweite Schale 3, weist eine erste Haltevorrichtung 5 und eine zweite Haltevorrichtung 6 auf, welche einstückig mit der ersten Schale 2 ausgebildet und an einem ersten Umfang der ersten Schale 2 angeordnet sind. Mit der ersten Haltevorrichtung 5 und der zweiten Haltevorrichtung 6 ist eine erste Befestigungsvorrichtung 4 verbunden, welche als metallisches Befestigungsband ausgeführt ist. Die erste Befestigungsvorrichtung 4 ist um die erste Schale 2 und die zweite Schale 3 angeordnet, wobei die erste Schale 2 und die zweite Schale 3 mittels der ersten Befestigungsvorrichtung 4, der ersten Haltevorrichtung 5 und der zweiten Haltevorrichtung 6 an der Radsatzwelle 1 befestigt sind.

Die erste Befestigungsvorrichtung 4, die erste Haltevorrichtung 5 und die zweite Haltevorrichtung 6 sind wie im Zusammenhang mit Fig. 1 beispielhaft beschrieben ausgeführt und ausgerichtet. Die erste Befestigungsvorrichtung 4 ist wie im Zusammenhang mit Fig. 1 beispielhaft beschrieben mit der ersten Haltevorrichtung 5 und der zweiten Haltevorrichtung 6 verbunden.

Die erste Befestigungsvorrichtung 4 ist teilweise an der ersten Schale 2, an diese angelegt, und über Enden an dem ersten Umfang der ersten Schale 2 hinausreichend angeordnet. Die erste Befestigungsvorrichtung 4 ist von der ersten Haltevorrichtung 5 über ein erstes Ende des ersten Umfangs der ersten Schale 2 hinaus, ab dem ersten Ende die zweite Schale 3 umgreifend zu einem zweiten Ende des ersten Umfangs der ersten Schale 2 und von dem zweiten Ende zu der zweiten Haltevorrichtung 6 geführt angeordnet.

Die erste Haltevorrichtung 5 und die zweite Haltevorrichtung 6 bilden ein erstes Haltevorrichtungspaar. Entlang einer in Fig. 2 projizierend erscheinenden Längsachse 7 der Radsatzwelle 1 sind, aufeinanderfolgend, in Fig. 2 nicht gezeigte, weitere Haltevorrichtungspaare der ersten Schale 2 und in Fig. 2 ebenfalls nicht gezeigte, weitere Befestigungsvorrichtungen, welche mit den weiteren Haltevorrichtungspaaren verbunden sind, an weiteren Umfängen der ersten Schale 2 angeordnet. Die weiteren Befestigungsvorrichtungen sind die zweite Schale 3 umgreifend angeordnet.

Die weiteren Haltevorrichtungspaare sind konstruktiv und funktionell gleich wie das erste Haltevorrichtungspaar ausgeführt, die weiteren Befestigungsvorrichtungen sind konstruktiv und funktionell gleich wie die erste Befestigungsvorrichtung 4 ausgeführt.

In Fig. 3 ist ein Flussdiagramm zu einer beispielhaften Ausführungsvariante eines erfindungsgemäßen Verfahrens zum Bearbeiten einer metallischen ersten Schale 2 einer ballistischen Schutzanordnung für Fahrzeuge, wie sie beispielhaft in Fig. 1 und Fig. 2 gezeigt ist, dargestellt.

In einem ersten Verfahrensschritt 22 werden aus der ersten Schale 2 eine erste Haltevorrichtung 5 sowie weitere Haltevorrichtungen, mittels welcher eine längliche, zumindest teilweise um die erste Schale 2 anordenbare erste Befestigungsvorrichtung 4 sowie längliche, zumindest teilweise um die erste Schale 2 anordenbare, weitere Befestigungsvorrichtungen der Schutzanordnung an der ersten Schale 2 positionierbar und arretierbar sind, wobei die erste Schale 2 mittels der ersten Befestigungsvorrichtung 4, der weiten Befestigungsvorrichtungen, der ersten Haltevorrichtung 5 und der weiteren Haltevorrichtungen an einer Radsatzwelle 1 für ein Fahrwerk für ein Schienenfahrzeug, wie sie beispielhaft in Fig. 2 gezeigt ist, befestigbar ist, durch teilweises und spaltförmiges Ausschneiden von Material aus der ersten Schale 2 einstückig mit der ersten Schale 2 ausgebildet. Durch das Ausschneiden werden Spalte mit einer Breite von 1,6 mm in der ersten Schale 2 gebildet. Das Ausschneiden wird als Laserschneidevorgang durchgeführt. Erfindungsgemäß ist es jedoch auch vorstellbar, den ersten Verfahrensschritt 22 z.B. als Wasserstrahlschneidevorgang oder als Fräsvorgang etc. durchzuführen.

Nach dem ersten Verfahrensschritt 22 wird ein zweiter Verfahrensschritt 23 vorgenommen, in welchem die erste Schale 2 mittels eines ersten Umformvorgangs in eine Form gebracht wird, in welcher die erste Schale 2 die Radsatzwelle 1 teilweise ummantelnd anordenbar ist. Nach dem zweiten Verfahrensschritt 23 weist die erste Schale 2 eine halbzylindrisch gekrümmte Form auf. Erfindungsgemäß sind jedoch auch andere Formen denkbar. Der erste Umformvorgang wird als Drückvorgang durchgeführt. Erfindungsgemäß ist es jedoch auch vorstellbar, dass der erste Umformvorgang ein Pressvorgang oder ein Walzvorgang etc. ist.

Danach werden in einem dritten Verfahrensschritt 24 ein brückenförmiger erster Abschnitt 8 der ersten Haltevorrichtung 5, brückenförmige weitere Abschnitte der weiteren Haltevorrichtungen, eine erste Lasche 16 und eine zweite Lasche 17 der ersten Haltevorrichtung 5 sowie weitere Laschen der weiteren Haltevorrichtungen mittels eines zweiten Umformvorgangs derart umgeformt, dass der erste Abschnitt 8, die weiteren Abschnitte, die erste Lasche 16, die zweite Lasche 17 und die weiteren Laschen von der ersten Schale 2 abstehend ausgerichtet sind. Der zweite Umformvorgang kann beispielsweise als Drückvorgang, Pressvorgang oder Biegevorgang etc. durchgeführt werden.

Erfindungsgemäß ist es auch denkbar, dass mittels des dritten Verfahrensschritts 24 beispielsweise einseitig freie, z.B. stegförmige, Abschnitte der ersten Haltevorrichtung 5 und der weiteren Haltevorrichtungen umgeformt werden.

Nach dem dritten Verfahrensschritt 24 kann die erste Schale 2 an die Radsatzwelle 1 angelegt werden und können die erste Befestigungsvorrichtung 4 und die weiteren Befestigungsvorrichtungen zur Befestigung der ersten Schale 2 an der Radsatzwelle 1 wie im Zusammenhang mit Fig. 1 beispielhaft beschrieben mit der ersten Haltevorrichtung 5 und den weiteren Haltevorrichtungen verbunden werden. Durch Umbiegen der ersten Lasche 16, der zweiten Lasche 17 und der weiteren Laschen, welche zunächst von der ersten Schale 2 abstehend ausgerichtet sind, können die erste Befestigungsvorrichtung 4 und die weiteren Befestigungsvorrichtungen gegen die erste Schale 2 gedrückt werden.

*Unabhängig vom grammatikalischen Geschlecht eines bestimmten Begriffes sind Personen mit männlicher, weiblicher oder anderer Geschlechteridentität mit umfasst.*

### Bezugszeichenliste

- 1: Radsatzwelle
- 2: Erste Schale
- 3: Zweite Schale
- 4: Erste Befestigungsvorrichtung
- 5: Erste Haltevorrichtung
- 6: Zweite Haltevorrichtung
- 7: Längsachse
- 8: Erster Abschnitt
- 9: Zweiter Abschnitt
- 10: Erster Durchlass
- 11: Zweiter Durchlass
- 12: Erste Zahnreihe
- 13: Zweite Zahnreihe
- 14: Dritte Zahnreihe
- 15: Vierte Zahnreihe
- 16: Erste Lasche
- 17: Zweite Lasche
- 18: Dritte Lasche
- 19: Vierte Lasche
- 20: Erste Einlage
- 21: Zweite Einlage
- 22: Erster Verfahrensschritt
- 23: Zweiter Verfahrensschritt
- 24: Dritter Verfahrensschritt

## Patentansprüche

1. Ballistische Schutzanordnung für Fahrzeuge, insbesondere für eine Radsatzwelle (1) für ein Fahrwerk für ein Schienenfahrzeug, mit zumindest einer gekrümmten oder krümmbaren ersten Schale (2), welche die Radsatzwelle (1) zumindest teilweise ummantelnd anordenbar ist, sowie mit zumindest einer länglichen, zumindest teilweise um die zumindest erste Schale (2) anordenbaren ersten Befestigungsvorrichtung (4), **dadurch gekennzeichnet, dass** die zumindest erste Schale (2) zumindest eine erste Haltevorrichtung (5) aufweist, mittels welcher die zumindest erste Befestigungsvorrichtung (4) an der zumindest ersten Schale (2) positionierbar und arretierbar ist, wobei die zumindest erste Schale (2) mittels der zumindest ersten Befestigungsvorrichtung (4) und der zumindest ersten Haltevorrichtung (5) an der Radsatzwelle (1) befestigbar ist, und wobei die zumindest erste Haltevorrichtung (5) einstückig mit der zumindest ersten Schale (2) ausgebildet ist.

2. Ballistische Schutzanordnung nach Anspruch 1, **dadurch gekennzeichnet, dass** die zumindest erste Befestigungsvorrichtung (4) an der zumindest ersten Schale (2) formschlüssig arretierbar ist.

3. Ballistische Schutzanordnung nach Anspruch 1 oder 2, **dadurch gekennzeichnet, dass** die zumindest erste Haltevorrichtung (5) zumindest einen brückenförmigen oder stegförmigen ersten Abschnitt (8) aufweist, wobei zwischen zumindest einem Bereich der zumindest ersten Schale (2) abseits des zumindest ersten Abschnitts (8) und dem zumindest ersten Abschnitt (8) zumindest ein erster Durchlass (10) ausgebildet ist, und wobei die zumindest erste Befestigungsvorrichtung (4) durch den zumindest ersten Durchlass (10) hindurchführbar ist und der zumindest erste Abschnitt (8) mittels der zumindest ersten Befestigungsvorrichtung (4) zumindest teilweise ummantelbar ist.

4. Ballistische Schutzanordnung nach Anspruch 3, **dadurch gekennzeichnet, dass** die zumindest erste Schale (2) in dem zumindest einen Bereich abseits des zumindest ersten Abschnitts (8) im Bereich des zumindest ersten Durchlasses (10) und/oder der zumindest erste Abschnitt (8) im Bereich des zumindest ersten Durchlasses (10) zahnförmig oder zackenförmig ausgeführt sind oder ist.

5. Ballistische Schutzanordnung nach Anspruch 4, **dadurch gekennzeichnet, dass** die zumindest erste Schale (2) in dem zumindest einen Bereich abseits des zumindest ersten Abschnitts (8) und/oder der zumindest erste Abschnitt (8) eine erste Zahnreihe (12) oder erste Zackenreihe mit zumindest vier Zähnen oder Zacken aufweisen oder aufweist.

6. Ballistische Schutzanordnung nach einem der Ansprüche 1 bis 5, **dadurch gekennzeichnet, dass** die zumindest erste Haltevorrichtung (5) zumindest eine erste Lasche (16) aufweist, welche an die zumindest erste Befestigungsvorrichtung (4) anlegbar ist, wobei die zumindest erste Befestigungsvorrichtung (4) zwischen der zumindest ersten Schale (2) und der zumindest ersten Lasche (16) anordenbar ist.

7. Ballistische Schutzanordnung nach einem der Ansprüche 1 bis 6, **dadurch gekennzeichnet, dass** die Schutzanordnung eine gekrümmte oder krümmbare zweite Schale (3) aufweist, welche zusammen mit der ersten Schale (2) die Radsatzwelle (1) ummantelnd anordenbar ist, wobei die erste Schale (2) und die zweite Schale (3) mittels der zumindest ersten Befestigungsvorrichtung (4) und der zumindest ersten Haltevorrichtung (5) an der Radsatzwelle (1) befestigbar sind.

8. Ballistische Schutzanordnung nach einem der Ansprüche 1 bis 7, **dadurch gekennzeichnet, dass** die zumindest erste Schale (2) eine zweite Haltevorrichtung (6) aufweist, mittels welcher die zumindest erste Befestigungsvorrichtung (4) an der zumindest ersten Schale (2) positionierbar und arretierbar ist, wobei die zumindest erste Schale (2) mittels der zumindest ersten Befestigungsvorrichtung (4), der ersten Haltevorrichtung (5) und der zweiten Haltevorrichtung (6) an der Radsatzwelle (1) befestigbar ist, wobei die zweite Haltevorrichtung (6) einstückig mit der zumindest ersten Schale (2) ausgebildet ist.

9. Ballistische Schutzanordnung nach Anspruch 8, **dadurch gekennzeichnet, dass** die zweite Haltevorrichtung (6) konstruktiv gleich wie die erste Haltevorrichtung (5) ausgeführt ist.

10. Ballistische Schutzanordnung nach Anspruch 8 oder 9, **dadurch gekennzeichnet, dass** die zweite Haltevorrichtung (6) spiegelverkehrt zu der ersten Haltevorrichtung (5) ausgerichtet ist.

11. Ballistische Schutzanordnung nach einem der Ansprüche 8 bis 10, **dadurch gekennzeichnet, dass** in einem die Radsatzwelle (1) zumindest teilweise ummantelnden Zustand der zumindest ersten Schale (2) die zumindest erste Befestigungsvorrichtung (4) mit der ersten Haltevorrichtung (5) und mit der zweiten Haltevorrichtung (6) verbunden ist, wobei die zumindest erste Befestigungsvorrichtung (4) teilweise an der zumindest ersten Schale (2) und über Enden der zumindest ersten Schale (2) hinausreichend angeordnet ist.

12. Ballistische Schutzanordnung nach einem der Ansprüche 1 bis 11, **dadurch gekennzeichnet, dass** zumindest eine Oberfläche der zumindest ersten Befestigungsvorrichtung (4) rau, insbesondere gefurcht, gerillt oder gerändelt, ausgebildet ist.

13. Ballistische Schutzanordnung nach einem der Ansprüche 1 bis 12, **dadurch gekennzeichnet, dass** der Radsatzwelle (1) und der zumindest ersten Schale (2) zumindest eine erste Einlage (20) zwischenordenbar ist, wobei die zumindest erste Schale (2) metallisch ausgebildet ist und die zumindest erste Einlage (20) in einem Faserwerkstoff oder einem Faserverbundwerkstoff ausgebildet ist.

14. Radsatzwelle (1) für ein Fahrwerk für ein Schienenfahrzeug mit zumindest einer ballistischen Schutzanordnung nach einem der Ansprüche 1 bis 13.

15. Verfahren zum Bearbeiten einer ersten Schale (2) einer ballistischen Schutzanordnung für Fahrzeuge insbesondere nach einem der Ansprüche 1 bis 14, **dadurch gekennzeichnet, dass** in einem ersten Verfahrensschritt (22) aus der ersten Schale (2) zumindest eine erste Haltevorrichtung (5), mittels welcher eine längliche, zumindest teilweise um die erste Schale (2) anordenbare erste Befestigungsvorrichtung (4) der Schutzanordnung an der ersten Schale (2) positionierbar und arretierbar ist, wobei die erste Schale (2) mittels der ersten Befestigungsvorrichtung (4) und der zumindest ersten Haltevorrichtung (5) insbesondere an einer Radsatzwelle (1) für ein Fahrwerk für ein Schienenfahrzeug befestigbar ist, durch teilweises und spaltförmiges Ausschneiden oder Ausfräsen von Material aus der ersten Schale (2) einstückig mit der ersten Schale (2) ausgebildet wird, wobei in einem nach dem ersten Verfahrensschritt (22) durchgeführten zweiten Verfahrensschritt (23) die erste Schale (2) mittels eines ersten Umformvorgangs in eine Form gebracht wird, in welcher die erste Schale (2) die Radsatzwelle (1) zumindest teilweise ummantelnd anordenbar ist.

16. Verfahren nach Anspruch 15, **dadurch gekennzeichnet, dass** in einem dritten Verfahrensschritt (24) zumindest ein brückenförmiger oder stegförmiger erster Abschnitt (8) der zumindest ersten Haltevorrichtung (5) und/oder zumindest eine erste Lasche (16) der zumindest ersten Haltevorrichtung (5) mittels eines zweiten Umformvorgangs derart umgeformt werden oder wird, dass der zumindest erste Abschnitt (8) und/oder die zumindest erste Lasche (16) von der ersten Schale (2) abstehend ausgerichtet sind oder ist.
